# EUROPÄISCHE PATENTSCHRIFT

(11) **EP 0 828 598 B1**
(45) Veröffentlichungstag und Bekanntmachung des Hinweises auf die Patenterteilung: **26.01.2000**
(21) Anmeldenummer: 96919538.7
(22) Anmeldetag: 08.05.1996
(51) Int. Cl.: B29C 47/68, B01D 29/05

(54) **SIEBWECHSELVORRICHTUNG FÜR KUNSTSTOFFVERARBEITENDE ANLAGEN**
FILTER CHANGING DEVICE FOR PLASTICS PROCESSING PLANTS
DISPOSITIF CHANGEUR DE TAMIS POUR INSTALLATIONS DE TRANSFORMATION DE MATIERES PLASTIQUES

(30) Priorität: 31.05.1995 DE 19519907
(43) Veröffentlichungstag der Anmeldung: 18.03.1998
(73) Patentinhaber: Kreyenborg Verwaltungen und Beteiligungen GmbH & Co. KG, D-48157 Münster (DE)
(72) Erfinder: BRUCKMANN, Theodor, D-46509 Xanten (DE); SIMON, Ralf, D-48143 Münster (DE)
(74) Vertreter: Habbel, Hans-Georg, Dipl.-Ing.
(86) Internationale Anmeldenummer: DE9600846
(87) Internationale Veröffentlichungsnummer: WO9638286

(56) Entgegenhaltungen:
- EP-A- 0 707 878
- WO-A-92/16351
- DE-A- 3 905 963
- US-A- 5 032 267
- US-A- 5 417 866

## Beschreibung

Die Erfindung betrifft eine Siebwechselvorrichtung nach dem Oberbegriff des Anspruches 1.

Eine derartige Praxis ist aus der DE 39 05 963 A1 bekannt. Im Folgenden wird allgemein von "Sieb" gesprochen, wobei damit die verschiedenartigsten Siebe, Filter oder andere Rückhalteeinrichtungen für Verschmutzungen angesprochen sind.

Die gattungsgemäße Siebwechseleinrichtung ermöglicht kein Rückspülen des Siebes, sondern lediglich ein Entlüften. Dadurch, daß innerhalb des Gehäuses sowohl die Kanalteilung als auch die Kanalzusammenführung vorgenommen sind, während im Siebträger lediglich die Siebe angeordnet sind, sind die Strömungskanäle schlecht erreichbar zu Reinigungszwecken.

Aus der AT 395 825 ist eine gattungsfremde Siebwechseleinrichtung bekannt, die keine Kanalteilung oder Kanalzusammenführung mit zwei Einlaßkanälen aufweist und bei der eine Rückspülung des einzigen vorhandenen Siebes aus einer Sammelkammer heraus möglich ist, in der während des Betriebes der Vorrichtung Kunststoff gesammelt wird, welcher dem eigentlichen Volumenstrom entnommen wird. Insbesondere für Spritzgußanlagen ist eine derartige Einrichtung nicht vorteilhaft, da Schwankungen im Druck und im Volumen des Kunststoffmaterials auftreten, die zu Betriebsstörungen oder unregelmäßigen Füllgraden der nachgeschalteten Spritzgußeinrichtung führen können.

Der Erfindung liegt die Aufgabe zugrunde, eine gattungsgemäße Vorrichtung dahingehend zu verbessern, daß das Rückspülen und das Auswechseln eines Siebes unter Vermeidung von Lufteinschlüssen in den Produkten einer nachgeschalteten Spritzgußanlage möglich ist.

Diese der Erfindung zugrundeliegende Aufgabe wird durch eine Siebwechselvorrichtung mit den Merkmalen des Anspruches 1 gelöst.

In der normalen Arbeitsstellung, in der die kunststoffverarbeitende Anlage einsatzbereit ist, verläuft daher ein Kunststoffstrom durch eine oder beide Einlaßöffnungen des Siebträgers und dementsprechend durch ein oder durch zwei Siebe zu dem gemeinsamen Auslaßkanal des Siebträgers, der mit dem gehäuseseitigen dritten Abschnitt des Strömungskanales in Verbindung steht.

Gegenüber dieser Arbeitsstellung (erste Stellung des Siebträgers) ist erfindungsgemäß der Siebträger in eine zweite (Rückspül-)stellung beweglich angeordnet, in der nach wie vor eine Verbindung zwischen einem Einlaßkanal des Siebträgers und dem ersten Abschnitt des Strömungskanales besteht und Kunststoff in den Siebträger einströmen kann.

Der Auslaßkanal des Siebträgers ist jedoch nicht mehr in Verbindung mit dem dritten Abschnitt des Strömungskanales, sondern ist abgeschlossen und liegt beispielsweise an einer Wandung des Gehäuses an, so daß hier eine Strömungsumkehr des Kunststoffes erzwungen wird und dieser durch den jeweils anderen Einlaßkanal des Siebträgers zurückströmt und damit eine Rückspülung des in diesem zweiten Einlaßkanal angeordneten Siebes bewirkt. Der dabei zurückströmende Kunststoff kann durch eine Rückspülleitung im Gehäuse zu einer Auffangschale od. dgl. geleitet werden.

In eine dritte (Siebwechsel-)stellung kann der Siebträger so gegenüber seiner Arbeitsstellung bewegt werden, daß ein freier Zugang zu einer Einlaßöffnung und damit zu einem Sieb möglich ist, so daß in dieser Stellung ein Siebwechsel vorgenommen werden kann.

Erfindungsgemäß lassen sich Lufteinschlüsse in den produzierten Kunststofferzeugnissen dadurch vermeiden, daß nach einem Siebwechsel, bei dem Luft notwendigerweise in den Strömungsweg des Kunststoffes eindringt, die Anordnung zunächst in die Rückspülposition verfahren wird und Kunststoff durch den ersten Einlaßkanal und durch den zweiten Einlaßkanal in die Rückspülleitung gefördert wird, so daß bei dieser Kunststofförderung auch die Lufteinschlüsse durch die Rückspülleitung nach außen gefördert werden, bis die gesamte Siebwechselvorrichtung keinerlei Lufteinschlüsse mehr aufweist.

In diesem Zustand kann von der Rückspülposition aus der Siebträger in die normale Arbeitsposition bewegt werden, so daß anschließend die kunststoffverarbeitende Anlage betrieben werden kann, ohne Lufteinschlüsse im Kunststoffstrom aufzuweisen.

Für eine Spritzgußanlage bedeutet dies, daß während der Rückspülphase oder der Siebwechselphase theoretisch die gesamte Anlage kontinuierlich durchlaufen kann, so daß hier sogenannte Leerschüsse erfolgen, in denen keine Spritzgußteile hergestellt werden. Dies ist in jedem Fall unkritisch gegenüber der Herstellung von Spritzgußteilen mit Lufteinschlüssen, die ggf. nicht bemerkt werden. Durch die erfindungsgemäße Vorrichtung ist daher die Qualität der Erzeugnisse der kunststoffverarbeitenden Anlage auf einem hohen Niveau sichergestellt.

In an sich bekannter Weise kann der Siebträger als länglicher Bolzen ausgebildet sein, bei dem die beiden Einlaßkanäle in Längsrichtung des Bolzens hintereinander angeordnet sind. Auf diese Weise ist durch eine einfache translatorische Bewegung eine Ansteuerung der drei beschriebenen Stellungen der Siebwechselvorrichtung möglich.

Drucksensoren können vorgesehen sein, um bei Überschreitung eines gewissen Toleranz-Druckbereiches eine automatische Bewegung des Siebträgers einzuleiten, so daß zunächst eine automatische Rückspülung der Siebe im Siebträger erfolgen kann und - falls dies nicht zu einer genügenden Druckabsenkung führt - können Meldungen an das Bedienungspersonal erfolgen, die dann einen Siebwechsel vornehmen kann.

Weitere vorteilhafte Ausgestaltungen der erfindungsgemäßen Einrichtung sind den Unteransprüchen entnehmbar.

Ein Ausführungsbeispiel einer erfindungsgemäßen Siebwechselvorrichtung wird anhand der Zeichnungen im folgenden näher erläutert. Dabei zeigt
- Fig. 1: einen Horizontalschnitt durch eine erfindungsgemäße Vorrichtung in schematischer Darstellung, wobei sich die Vorrichtung in ihrer Arbeitsstellung befindet,
- Fig. 2: eine Ansicht ähnlich Fig. 1, wobei die Vorrichtung in der Rückspülstellung befindlich ist und
- Fig. 3: eine Ansicht ähnlich Fig. 1 oder 2, wobei die Vorvorrichtung sich in ihrer Siebwechselstellung befindet.

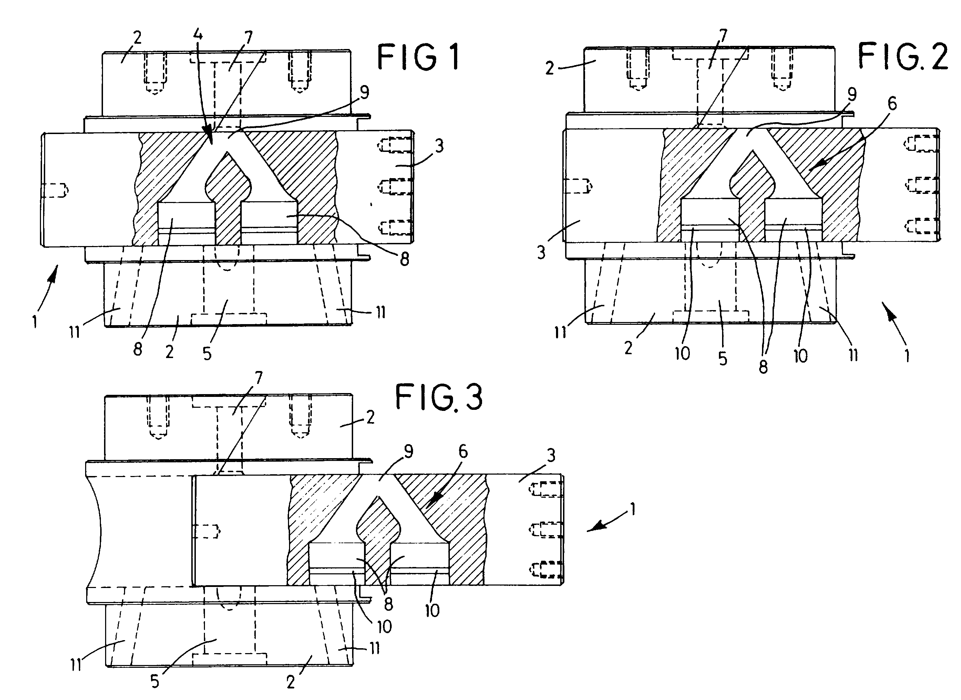

In Fig. 1 ist mit 1 allgemein eine Siebwechselvorrichtung bezeichnet, die ein Gehäuse 2 und einen Siebträger 3 umfaßt. Die Vorrichtung 1 schafft einen Strömungsweg 4 für flüssigen Kunststoff, wobei das Gehäuse 2 zunächst einen ersten Abschnitt 5 dieses Strömungsweges 4 ausbildet, der Siebträger 3 einen zweiten Abschnitt 6 und das Gehäuse 2 wiederum einen dritten Abschnitt 7 dieses Strömungsweges 4 ausbildet.

Der zweite Abschnitt 6 weist zwei Einlaßkanäle 8 auf, die zu einem gemeinsamen Auslaßkanal 9 zusammengeführt sind. In jedem der Einlaßkanäle 8 ist ein Sieb 10 für den Kunststoff vorgesehen.

Fig. 1 stellt die Arbeitsstellung der Siebwechselvorrichtung 1 dar. In dieser Arbeitsstellung kann Kunststoff durch den ersten Abschnitt 5 des Strömungsweges 4 in die beiden Einlaßkanäle 8 des Siebträgers 3 gefördert werden, die sich zu dem Auslaßkanal 9 vereinigen. Von hier aus tritt der Kunststoff in den dritten Abschnitt 7 des Strömungsweges 4 ein und gelangt beispielsweise in eine Spritzgußanlage.

In Fig. 2 ist der Siebträger 3 aus seiner Arbeitsstellung bewegt worden, indem er entlang seiner Längsachse verschoben wurde. In dieser Rückspülstellung fließt Kunststoff durch den ersten Abschnitt 5 in den linken Einlaßkanal 8 und von dort in den gemeinsamen Auslaßkanal 9 des Siebträgers 3. Dieser Auslaßkanal 9 weist in der Rückspülstellung keine Verbindung mit dem zweiten Abschnitt 7 des Strömungskanales 4 auf, sondern liegt am Gehäuse 2 an. Es findet hier daher eine Strömungsumlenkung und Strömungsumkehr des Kunststoffes statt. Dieser fließt durch den rechten Einlaßkanal zurück und spült daher das Sieb 10 des rechten Einlaßkanales 8. Dieser rechte Einlaßkanal 8 steht nicht mit dem ersten Abschnitt 5 des Strömungsweges 4 in Verbindung, sondern mit einer Rückspülleitung 11 des Gehäuses 2.

Wenn nach dem Rückspülen des Filters 10 der Siebträger 3 wieder in die Arbeitsstellung gemäß Fig. 1 zurückverfahren wird, sind Lufteinschlüsse im gesamten Strömungsweg 4 ausgeschlossen, da während der ganzen Phase der Filterrückspülung niemals Luft in den Strömungsweg 4 gelangen konnte.

Ein Rückspülen des linken Filters 10 ist durch eine gleichartige Verschiebebewegung des Siebträgers 3, allerdings von der Arbeitsstellung aus nach links gerichtet, analog zu der Stellung gemäß Fig. 2 möglich.

Fig. 3 stellt die Siebwechselvorrichtung 1 in der Siebwechselstellung dar. In dieser Siebwechselstellung ist der Siebträger 3 gegenüber der Rückspülstellung noch weiter aus seiner Arbeitsstellung heraus verfahren, so daß der rechte Einlaßkanal 8 und das darin angeordnete Sieb 10 frei zugänglich für einen Filterwechsel sind. Bei einem derartigen Filterwechsel dringt selbstverständlich Luft in den Strömungskanal 4 ein, insbesondere im Bereich des rechten Einlaßkanales 8.

Daher wird die Vorrichtung aus dieser Siebwechselstellung gemäß Fig. 3 nicht unmittelbar in die Arbeitsstellung gemäß Fig. 1 zurückbewegt, sondern vielmehr zunächst lediglich in die Rückspülstellung gemäß Fig. 2 bewegt. In dieser Rückspülstellung wird dann Kunststoff auf dieselbe Weise gefördert, wie zum Rückspülen eines Siebes, so daß auf diese Weise Kunststoff mitsamt den darin enthaltenen Lufteinschlüssen durch die Rückspülleitung 11 aus der Siebwechselvorrichtung 1 ausgetragen wird. Anschließend, wenn keine Lufteinschlüsse mehr im System befindlich sind, wird der Siebträger 3 aus der Rückspülstellung in die Arbeitsstellung verfahren, so daß nun im Anschluß an einen Siebwechsel die Siebwechselvorrichtung ohne Lufteinschlüsse zur Verfügung steht.

Aus Übersichtlichkeitsgründen nicht dargestellt sind Sensoren, mit denen der Verschmutzungsgrad der Siebe 10 gemessen werden kann. Im einfachsten Fall kann dies beispielsweise durch einen Drucksensor im ersten Abschnitt 5 des Strömungsweges 4 erfolgen, wobei ein hier zunehmender Druck auf die zunehmende Verschmutzung und Verstopfung der Siebe 10 hinweist. Ein automatischer Wechsel des Siebträgers 3 zwischen der Arbeitsstellung gemäß Fig. 1 und der Rückspülstellung gemäß Fig. 2 kann automatisch eingeleitet und durchgeführt werden, so daß eine automatische Siebrückspülung erfolgen kann. Für einen Siebwechsel kann ein derartiger Sensor mit einer Warneinrichtung verbunden sein, die Bedienungspersonal auf einen zu hohen Widerstand der Siebe 10 hinweist, so daß dann manuell der Siebwechsel vorgenommen werden kann.

Im Gegensatz zu dem dargestellten Ausführungsbeispiel, bei dem die unterschiedlichen Arbeitsstellungen lediglich durch eine translatorische Bewegung des Siebträgers 3 eingenommen werden, kann der Siebträger 3 auch anders ausgestaltet werden, so daß die einzelnen Stellungen, beispielsweise durch Rotationen des Siebträgers eingenommen werden können. Im dargestellten Ausführungsbeispiel können die beiden Einlaßkanäle 8 und der Auslaßkanal 9, demzufolge auch der erste Abschnitt 5 und der dritte Abschnitt 7, in einer gemeinsamen horizontalen Ebene liegen, abweichend von diesem Ausführungsbeispiel können jedoch die einzelnen Abschnitte des Strömungsweges in horizonal versetzten Ebenen angeordnet sein.

## Patentansprüche

1. Siebwechselvorrichtung (1) für kunststoffverarbeitende Anlagen,
- mit einem Gehäuse (2),
- und mit einem im Gehause (2) beweglich gelagerten Siebträger (3),
- wobei das Gehäuse (2) und der Siebträger (3) gemeinsam einen Strömungsweg (4) für den flüssigen Kunststoff ausbilden,
- und wobei das Gehäuse (2) einen ersten Abschnitt (5) des Strömungsweges ausbildet, welcher einen Haupt-Einlaßkanal aufweist,
- und wobei das Gehäuse (2) weiterhin einen einen dritten Abschnitt (7) des Strömungsweges ausbildet, welcher einen Auslaßkanal aufweist,
- während der Siebträger (3) einen zweiten, mittleren Abschnitt (6) des Strömungsweges ausbildet, in dem zwei Siebe (10) angeordnet sind,
- und wobei jedes Sieb (10) durch eine Bewegung des Siebträgers (3) wahlweise in den Strömungsweg (4) oder aus dem Strömungsweg (4) bewegbar ist,
- und wobei die Siebwechselvorrichtung (1) eine Kanalteilung des Haupt-Einlaßkanals in wenigstens zwei Einlaßkanäle (8) aufweist,
- sowie eine Kanalzusammenführung, bei der die Einlaßkanäle (8) zu dem Auslaßkanal (9) zusammenlaufen,
- wobei in jedem Einlaßkanal (8) ein Sieb (10) angeordnet ist,
- und wobei der Siebträger (3) aus einer Arbeitsstellung, in der ein Strömungsweg vom Haupt-Einlaßkanal und durch beide Einlaßkanäle (8) zu dem Auslaßkanal (9) verläuft,
- in eine Siebwechselstellung beweglich ist, in der der Siebträger (3) gegenüber dem ersten und dritten Abschnitt des Strömungsweges versetzt angeordnet ist und in der ein Einlaßkanal einen freien Zugang zu dem darin angeordneten Sieb schafft,
dadurch gekennzeichnet,
- daß die Kanalzusammenführung der Einlaßkanäle (8) im Siebträger (3) ausgebildet ist,
- und daß der Siebträger (3) in eine Rückspülstellung beweglich ist, in der der im Siebträger (3) ausgebildete Auslaßkanal (9) vom dritten Abschnitt (7) des Strömungsweges (4) versetzt vor einer Wandung angeordnet ist
- wobei in der Rückspülstellung ein Einlaßkanal (8) mit dem ersten Abschnitt (5) des Strömungsweges (4) verbunden ist,
- und wobei in der Rückspülstellung ein zweiter Einlaßkanal (8) mit einer im Gehäuse (2) vorgesehenen Rückspülleitung (11) verbunden ist.

2. Vorrichtung nach Anspruch 1, dadurch gekennzeichnet, daß der Siebträger (3) als länglicher Bolzen ausgebildet ist, der längsverschiebbar im Gehäuse (2) gelagert ist, wobei der zweite Abschnitt (6) des Strömungsweges (4) im wesentlichen quer zur Längsachse des Bolzens verläuft.

3. Vorrichtung nach Anspruch 2, dadurch gekennzeichnet, daß der Bolzen zwei Einlaßkanäle (8) aufweist, die in Längsrichtung des Bolzens hintereinander angeordnet sind.

4. Vorrichtung nach einem der vorhergehenden Ansprüche, dadurch gekennzeichnet, daß der erste Abschnitt (5) so groß bemessen und der Abstand zwischen zwei Einlaßkanälen (8) so gering bemessen ist, daß in der Arbeitsstellung der Vorrichtung (1) der Strömungsweg (4) durch beide Einlaßkanäle (8) führt.

5. Vorrichtung nach einem der vorhergehenden Ansprüche, gekennzeichnet durch Sensoren zur Ermittlung des Verschmutzungsgrades der Siebe (10), wobei die Sensoren mit einer Meldeeinrichtung verbunden sind.

6. Vorrichtung nach einem der vorhergehenden Ansprüche, gekennzeichnet durch Sensoren zur Ermittlung des Verschmutzungsgrades der Siebe (10), wobei die Sensoren mit einer Siebträger-Steuerung zur automatischen Einleitung einer Siebrückspülung verbunden sind.

7. Vorrichtung nach Anspruch 5 oder 6, gekennzeichnet durch Drucksensoren, die in Strömungsrichtung des Kunststoffs vor den Sieben (10) angeordnet sind.

## Claims

1. A screen changing device (1) for plastics processing installations,
- comprising a housing (2),
- and comprising a screen support (3) mounted movably in the housing (2),
- the housing (2) and the screen support (3) together forming a flow path (4) for the liquid plastics,
- and the housing (2) forming a first portion (5) of the flow path, said first portion (5) comprising a main inlet channel,
- and the housing (2) further forming a third portion (7) of the flow path, said third portion (7) comprising an outlet channel,
- while the screen support (3) forms a second, central portion (6) of the flow path, in which portion (6) two screens (10) are arranged,
- and each screen (10) being movable optionally into the flow path (4) or out of the flow path (4) by movement of the screen support (3),
- and the screen changing device (1) comprising division of the main inlet channel into at least two inlet channels (8),
- together with a channel junction, at which the inlet channels (8) converge to form the outlet channel (9),
- a screen (10) being arranged in each inlet channel (8),
- and the screen support (3) being movable from an operating position, in which a flow path extends from the main inlet channel through both inlet channels (8) to the outlet channel (9)
- into a screen changing position, in which the screen support (3) is offset with respect to the first and third portions of the flow path and in which an inlet channel provides free access to the screen arranged therein,
characterised in that
- the junction of the inlet channels (8) is formed in the screen support (3),
- the screen support (3) is movable into a back-flushing position, in which the outlet channel (9) formed in the screen support (3) is so arranged as to be offset with respect to the third portion (7) of the flow path (4) and in front of a wall
- wherein, in the back-flushing position, one inlet channel (8) is connected with the first portion (5) of the flow path (4),
- and wherein, in the back-flushing position, a second inlet channel (8) is connected with a back-flush duct (11) provided in the housing (2).

2. A device according to claim 1, characterised in that the screen support (3) takes the form of an elongate bolt, which is mounted in the housing (2) so as to be displaceable in the longitudinal direction, the second portion (6) of the flow path (4) extending substantially at right angles to the longitudinal axis of the bolt.

3. A device according to claim 2, characterised in that the bolt comprises two inlet channels (8), which are arranged one behind the other in the longitudinal direction of the bolt.

4. A device according to any one of the preceding claims, characterised in that the first portion (5) is so large and the distance between two inlet channels (8) so small that, when the device (1) is in the operating position, the flow path (4) runs through both inlet channels (8).

5. A device according to any one of the preceding claims, characterised by sensors for detecting the degree of contamination of the screens (10), the sensors being connected with an indicator device.

6. A device according to any one of the preceding claims, characterised by sensors for detecting the degree of contamination of the screens (10), the sensors being connected with a screen support control means for automatic actuation of screen back-flushing.

7. A device according to claim 5 or claim 6, characterised by pressure sensors, which are arranged upstream of the screens (10) in the flow direction of the plastics.

## Revendications

1. Dispositif changeur de tamis (1) pour installations de transformation de matières plastiques,
- comportant un logement (2) et un support de tamis (3) supporté de manière mobile dans le logement (2),
- dans lequel le logement (2) et le support de tamis (3) forment ensemble un trajet d'écoulement (4) pour la matière plastique liquide,
- et dans lequel le logement (2) forme une première section (5) du trajet d'écoulement qui présente un canal d'entrée principal,
- et dans lequel le logement (2) forme en outre une troisième section (7) du trajet d'écoulement présentant un canal de sortie,
- tandis que le support de tamis (3) forme une deuxième section centrale (6) du trajet d'écoulement dans laquelle sont disposés deux tamis ( 10),
- et dans lequel chaque tamis (10) peut être sélectivement introduit dans le trajet d'écoulement (4) ou retiré de celui-ci par un déplacement du support de tamis (3),
- et dans lequel le dispositif changeur de tamis (1) présente une division du canal d'entrée principal en au moins deux canaux d'entrée (8),
- ainsi qu'une réunion des canaux au niveau de laquelle les canaux d'entrée (8) se réunissent pour former le canal de sortie (9),
- un tamis (10) étant disposé dans chaque canal d'entrée (8),
- et dans lequel le support de tamis (3) se déplace à partir d'une position de travail, dans laquelle un trajet d'écoulement s'étend du canal d'entrée principal au canal de sortie (9) en passant par les deux canaux d'entrée (8), vers une position de changement de tamis dans laquelle le support de tamis (3) est décalé par rapport à la première section du trajet d'écoulement et à la troisième et dans laquelle un canal d'entrée laisse accéder librement au tamis qu'il contient,
- caractérisé en ce que la réunion des canaux d'entrée (8) est réalisée dans le support de tamis (3),
- et en ce que le support de tamis (3) peut être déplacé vers une position de reflux dans laquelle le canal de sortie (9) formé dans le support de tamis (3) est décalé par rapport à la troisième section (7) du trajet d'écoulement (4) devant une cloison,
- de sorte qu'un canal d'entrée (8) communique avec la première section (5) du trajet d'écoulement (4) dans la position de reflux, et
- et qu'un deuxième canal d'entrée (8) communique dans la position de reflux avec une conduite de reflux (11) prévue dans le logement (2).

2. Dispositif selon la revendication 1, caractérisé en ce que le support de tamis (3) est conformé comme un goujon allongé qui est supporté dans le logement (2) de manière à coulisser longitudinalement, la deuxième section (6) du trajet d'écoulement (4) étant sensiblement perpendiculaire à l'axe longitudinal du goujon.

3. Dispositif selon la revendication 2, caractérisé en ce que le goujon présente deux canaux d'entrée (8) qui sont disposés l'un derrière l'autre dans le sens longitudinal du goujon.

4. Dispositif selon l'une quelconque des revendications précédentes, caractérisé en ce que la première section (5) est suffisamment grande et la distance entre deux canaux d'entrée (8) est suffisamment petite pour que le trajet d'écoulement (4) passe par les deux canaux d'entrée (8) dans la position de travail du dispositif (1).

5. Dispositif selon l'une quelconque des revendications précédentes, caractérisé en ce qu'il comporte des capteurs destinés à déterminer le degré d'encrassement des tamis (10), ces capteurs étant reliés à un dispositif de signalisation.

6. Dispositif selon l'une quelconque des revendications précédentes, caractérisé en ce qu'il comporte des capteurs destinés à déterminer le degré d'encrassement des tamis (10), ces capteurs étant reliés à une commande du support de tamis qui peut déclencher automatiquement un reflux dans le tamis.

7. Dispositif selon la revendication 5 ou 6, caractérisé en ce qu'il comporte des capteurs de pression disposés avant les tamis (10) dans le sens d'écoulement de la matière plastique.
